(19) Europäisches Patentamt
European Patent Office
Office européen des brevets

(11) **EP 4 016 475 B1**

(12) **EUROPEAN PATENT SPECIFICATION**

(45) Date of publication and mention
of the grant of the patent:
**06.08.2025 Bulletin 2025/32**

(21) Application number: **21208931.2**

(22) Date of filing: **18.11.2021**

(51) International Patent Classification (IPC):
*G06V 20/56* (2022.01)     *G01S 17/08* (2006.01)
*G01S 7/481* (2006.01)

(52) Cooperative Patent Classification (CPC):
**G06V 20/56; G01S 7/4815; G01S 17/08**

(54) **DISTANCE DETECTION SYSTEM AND DISTANCE DETECTION METHOD**

SYSTEM UND VERFAHREN ZUR ABSTANDSERKENNUNG

SYSTÈME ET PROCÉDÉ DE DÉTECTION DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2020 TW 109144212**

(43) Date of publication of application:
**22.06.2022 Bulletin 2022/25**

(73) Proprietor: **Pegatron Corporation
Taipei City 112 (TW)**

(72) Inventor: **HSU, Po-Ching
Taipei City 112 (TW)**

(74) Representative: **Becker, Eberhard
Becker Kurig & Partner
Patentanwälte mbB
Bavariastraße 7
80336 München (DE)**

(56) References cited:
**US-A1- 2016 187 471**

## Description

BACKGROUND

Technical Field

The disclosure relates to a technique for distance detection, and in particular, to a distance detection system and a distance detection method.

Description of Related Art

In current technology, there are automotive vision systems which can be used to assist driving. These automotive vision systems, however, may not exhibit good recognition performance in some cases. For example, in an environment with strong sunlight, there may be shadows of shelters such as bridges and trees. Here, if a contrast between the shadow on a road surface and the strong sunlight on the road surface is too sharp, the image recognition function of the conventional automotive vision systems may not be able to determine a distance between a vehicle and an object such as a road marking or an obstacle, which may lead to collisions or car accidents.

Similarly, in a dim environment, since it is not easy for the conventional automotive vision systems to recognize a road marking, a vehicle, or an outline of an object, collisions or car accidents may occur due to a failure to correctly recognize a distance.

Patent document US 2016/0187471 A1 discloses a method for determining the distance of an object by means of a polarization-modulated transmission light beam, wherein the transmission light beam reflected at the object is received as reception light beam by a polarization analyzer and the output signal thereof is fed to an evaluation unit for determining the distance, for the polarization-modulated transmission light beam to be generated by means of at least two light sources which emit differently polarized light beams, the light sources are operated in each case with a defined mark-space pattern, and the polarization analyzer is embodied with polarization filters corresponding at least to the number of light sources, the polarization plane of the polarization filters being correspondingly adapted in each case to a polarization plane of the light beams.

SUMMARY

The disclosure is directed to a distance detection system and a distance detection method. The invention is set out in the appended set of claims. The following disclosure serves a better understanding of the present invention.

The disclosure provides a distance detection system, the distance detection system including a first light source, a second light source, an image capturing circuit, and a processor. The first light source has a first polarization direction and includes multiple first light-emitting units. Each of the first light-emitting units emits a first light to illuminate a specific object based on the first polarization direction and a first modulation of each of the first light-emitting units. The second light source has a second polarization direction and includes multiple second light-emitting units. Each of the second light-emitting units emits a second light to illuminate the specific object based on the second polarization direction and a second modulation of each of the second light-emitting units. The image capturing circuit is configured to capture multiple image frames in a specific field of view of the image capturing circuit at multiple timing points. The specific object is within the specific field of view. Each of the image frames includes a specific pixel corresponding to the specific object. The processor is coupled to the first light source, the second light source, and the image capturing circuit, and is configured to execute the following. A first specific modulation and a second specific modulation presented by the specific pixel at the multiple timing points based on the image frames are obtained. The first specific modulation corresponds to the first polarization direction, and the second specific modulation corresponds to the second polarization direction. A first specific light-emitting unit among the multiple first light-emitting units is found based on the first specific modulation, and a second specific light-emitting unit among the multiple second light-emitting units is found based on the second specific modulation. A specific distance between the distance detection system and the specific object is calculated based on the first specific light-emitting unit and the second specific light-emitting unit.

The disclosure provides a distance detection method which is adapted for a distance detection system. The distance detection method includes the following. A first light is emitted to illuminate a specific object by multiple first light-emitting units of a first light source respectively based on a first polarization direction and a first modulation of each of the first light-emitting units. A second light is emitted to illuminate the specific object by multiple second light-emitting units of a second light source respectively based on a second polarization direction and a second modulation of each of the second light-emitting units. Multiple image frames are captured by an image capturing circuit in a specific field of view at multiple timing points. The specific object is within the specific field of view. Each of the image frames includes a specific pixel corresponding to the specific object. A first specific modulation and a second specific modulation presented by the specific pixel at the multiple timing points are obtained by a processor based on the image frames. A first specific light-emitting unit among the multiple first light-emitting units is found based on the first specific modulation by the processor, and a second specific light-emitting unit among the multiple second light-emitting units is found based on the second specific modulation by the processor. A specific distance between the distance detection system and the specific object is calculated based on the first specific light-emitting unit and the second specific light-emitting unit by the processor.

Therefore, even in a bright light/dim light environment, the specific distance between the distance detection system and the specific object can still be accurately determined by the method of the disclosure. As a result, the chances of collisions and car accidents are reduced.

BRIEF DESCRIPTION OF THE DRAWINGS

FIG. 1 is a schematic diagram of a distance detection system according to an embodiment of the disclosure.

FIG. 2 is a flow chart of a distance detection method according to an embodiment of the disclosure.

FIG. 3 is an application scenario diagram according to an embodiment of the disclosure.

FIG. 4 is a schematic diagram of a light source adopting a digital micro-mirror device technology according to an embodiment of the disclosure.

DESCRIPTION OF THE EMBODIMENTS

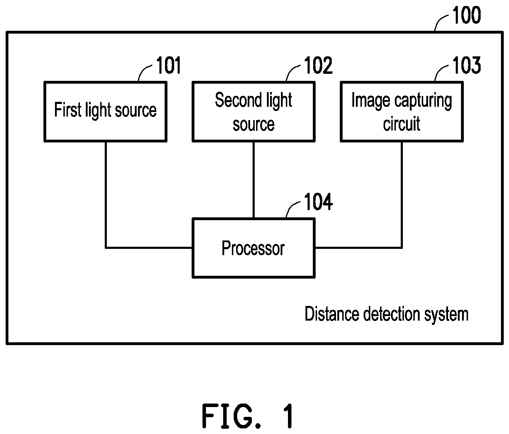

Referring to FIG. 1, FIG. 1 is a schematic diagram of a distance detection system according to an embodiment of the disclosure. In different embodiments, a distance detection system 100 may be configured to measure a distance between the distance detection system 100 and an object located in a field of view (FOV) of the distance detection system 100 in various devices/scenarios. For the ease of description of the concept of the disclosure, it is assumed below that the distance detection system 100 is disposed on a vehicle and is configured to measure a distance between the vehicle and an object located in front of the vehicle; however, the disclosure is not limited thereto.

As shown in FIG. 1, the distance detection system 100 may include a first light source 101, a second light source 102, an image capturing circuit 103, and a processor 104. In the embodiments of the disclosure, the first light source 101 and the second light source 102 may respectively be a left headlight and a right headlight of the vehicle which may be configured to illuminate forward of the vehicle. In different embodiments, the first light source 101 and the second light source 102 may be each realized as a pixel light device adopting digital light processing (DLP)/digital micro-mirror device (DMD) technology, a matrix light device adopting a light-emitting diode (LED), and/or a scan light device. However, the disclosure is not limited thereto.

In the embodiments, the first light source 101 has a first polarization direction and includes multiple first light-emitting units. Each of the first light-emitting units may emit a first light to illuminate a specific object based on the first polarization direction and a first modulation of each of the first light-emitting units. Similarly, the second light source 102 has a second polarization direction and includes multiple second light-emitting units. Each of the second light-emitting units may emit a second light to illuminate the specific object based on the second polarization direction and a second modulation of each of the second light-emitting units.

In an embodiment, the first light source 101 includes a polarization device/component (e.g. a polarizer) corresponding to the first polarization direction so that each of the first light-emitting units may emit the first light in the first polarization direction. Similarly, the second light source 102 includes another polarization device/component corresponding to the second polarization direction so that each of the second light-emitting units may emit the second light in the second polarization direction.

In the embodiments of the disclosure, a first combination composed of the first modulation of each of the first light-emitting units and the first polarization direction is unique in the distance detection system 100, and a second combination composed of the second modulation of each of the second light-emitting units and the second polarization direction is unique in the distance detection system 100.

For convenience of description, it is assumed below that the first polarization directions respectively corresponding to the first light-emitting units are all the same (e.g. all being a horizontal polarization direction), and the first modulations respectively corresponding to the first light-emitting units are all different. In addition, it is assumed that the second polarization directions respectively corresponding to the second light-emitting units are all the same (e.g. all being a vertical polarization direction), and the second modulations respectively corresponding to the second light-emitting units are all different. Furthermore, in some embodiments, the first polarization direction may be orthogonal to the second polarization direction; however, the disclosure is not limited thereto.

In an embodiment, the first light source 101 includes N1 first light-emitting units, and a single horizontal polarizer may be disposed in front of the N1 first light-emitting units so that the first polarization directions of the first light emitted by each of the first light-emitting units are all horizontal polarization directions. Furthermore, the first modulations of the N1 first light-emitting units may be pulse-amplitude modulations (PAMs) corresponding to different amplitudes. In this case, the first lights respectively emitted by the N1 first light-emitting units have the same first polarization direction (e.g. horizontal polarization direction) but different pulse-amplitude modulations.

In addition, the second light source 102 includes N2 second light-emitting units, and a single vertical polarizer may be disposed in front of the N2 second light-emitting units so that the second polarization directions of the second light emitted by each of the second light-emitting units are all vertical polarization directions. Furthermore, the second modulations respectively corresponding to the N2 second light-emitting units may be pulse-amplitude modulations corresponding to different amplitudes. In this case, the second lights respectively emitted by the N2 second light-emitting units have the same second polarization direction (e.g. vertical polarization direction) but different pulse-amplitude modulations.

In addition, in other embodiments, the first modulation corresponding to each of the first light-emitting units and/or the second modulation corresponding to each of the second light-emitting units may also be realized by other modulations (e.g. pulse width modulation (PWM)); however, the disclosure is not limited thereto.

In the embodiments of the disclosure, the image capturing circuit 103 is, for example, any type of polarization image capturing device. For example, in a first embodiment, the image capturing circuit 103 may include a first lens and a second lens respectively corresponding to the first polarization direction and the second polarization direction. The first lens includes a first polarizer corresponding to the first polarization direction, and the second lens includes a second polarizer corresponding to the second polarization direction. In this case, the first lens may capture multiple first image frames having the first polarization direction in a specific field of view through the first polarizer at multiple timing points. The second lens may capture multiple second image frames having the second polarization direction in the specific field of view through the second polarizer at the multiple timing points.

In a second embodiment, a polarization component array may be disposed in the image capturing circuit 103. The polarization component array may include multiple polarization component sets, and each of the polarization component sets may correspond to one of image capturing pixels of the image capturing circuit 103. In addition, each of the polarization component sets may include a first polarization component and a second polarization component respectively corresponding to the first polarization direction and the second polarization direction. In this case, each of the image frames captured by the image capturing circuit 103 includes multiple pixels. Each of the pixels may include a first sub-pixel and a second sub-pixel respectively corresponding to the first polarization direction and the second polarization direction; however, the disclosure is not limited thereto.

In an embodiment, the image capturing circuit 103 may be designed to photograph/capture image frames forward of the vehicle. That is, a field of view (hereinafter referred to as a specific field of view) of the image capturing circuit 103 capturing the image frames extends forward of the vehicle; however, the disclosure is not limited thereto.

In different embodiments, the processor 104 may be coupled to the first light source 101, the second light source 102, and the image capturing circuit 103. The processor 104 may be a general-purpose processor, a special-purpose processor, a conventional processor, a digital signal processor (DSP), multiple microprocessors, one or more microprocessors, controllers or microcontrollers integrated with a DSP core, an application specific integrated circuit (ASIC), a field programmable gate array (FPGA), any other type of integrated circuit, a state machine, an advanced RISC machine (ARM)-based processor or the like.

In the embodiments of the disclosure, the processor 104 may access a required module or program code to realize a method for determining a distance based on polarization vision provided by the disclosure. The method is described in detail below.

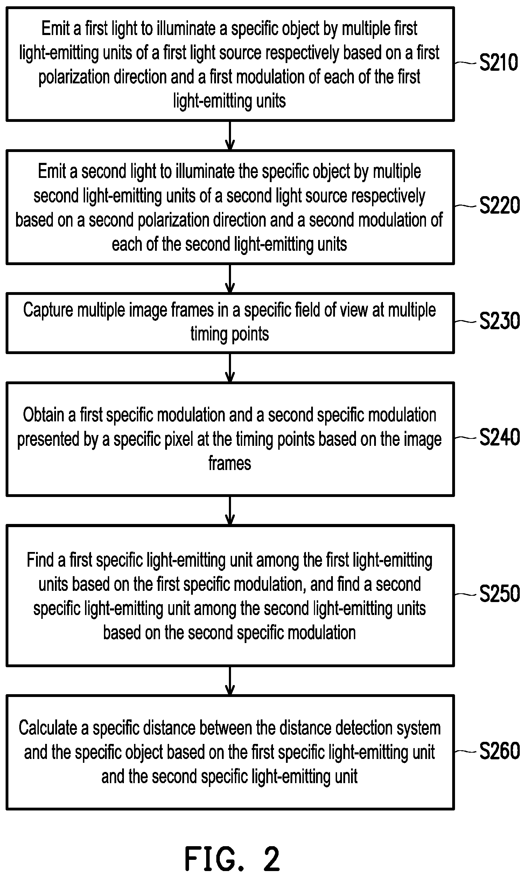

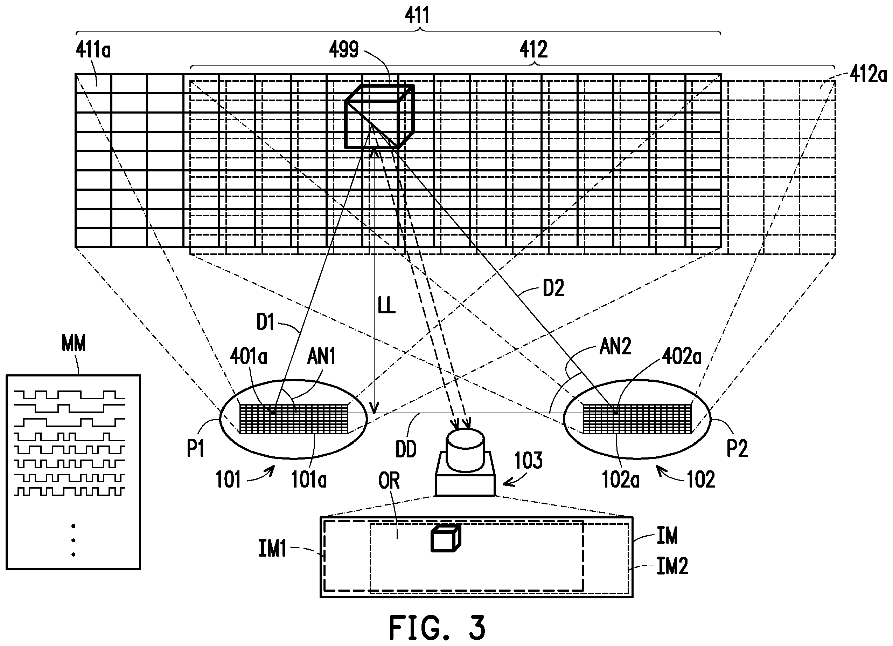

Referring to FIG. 2, FIG. 2 is a flow chart of a distance detection method according to an embodiment of the disclosure. The method of the embodiment may be executed by the distance detection system 100 in FIG. 1, and the details of each step in FIG. 2 are described below with reference to the elements shown in FIG. 1. Furthermore, in order to make the disclosure more comprehensible, further descriptions will be provided below with reference to FIG. 3. FIG. 3 is an application scenario diagram according to an embodiment of the disclosure.

First, in step S210, multiple first light-emitting units 101a of the first light source 101 may respectively emit a first light to illuminate a specific object 499 based on a first polarization direction and a first modulation of each of the first light-emitting units 101a. As shown in FIG. 3, the multiple first light-emitting units 101a may be arranged in a matrix. A polarizer P1 (e.g. a horizontal polarizer) may be disposed in front of the matrix. Furthermore, the first modulation corresponding to each of the first light-emitting units 101a may be one of multiple pulse width modulations MM as shown. The first modulation corresponding to each of the first light-emitting units 101a is different from each other; however, the disclosure is not limited thereto.

In this case, the first lights respectively emitted by the first light-emitting units 101a (the first polarization direction is, for example, a horizontal polarization direction) may integrally form a first illumination range 411. The first illumination range 411 may include a first illumination sub-range 411a corresponding to each of the first light-emitting units 101a.

In addition, in step S220, multiple second light-emitting units 102a of the second light source 102 may respectively emit a second light to illuminate the specific object 499 based on a second polarization direction and a second modulation of each of the second light-emitting units 102a. As shown in FIG. 3, the multiple second light-emitting units 102a may be arranged in a matrix. A polarizer P2 (e.g. a vertical polarizer) may be disposed in front of the matrix. Furthermore, the second modulation corresponding to each of the second light-emitting units 102a may be one of the multiple pulse width modulations MM as shown. The second modulation corresponding to each of the second light-emitting units 102a is different from each other; however, the disclosure is not limited thereto.

In this case, the second lights respectively emitted by the second light-emitting units 102a (the second polarization direction is, for example, a vertical polarization direction) may integrally form a second illumination range 412. The second illumination range 412 may include a second illumination sub-range 412a of each of the second light-emitting units 102a.

Next, in step S230, the image capturing circuit 103 may capture multiple image frames in a specific field of view at multiple timing points. The specific object 499 illuminated by the first light source 101 and the second light source 102 is present in the specific field of view. In this case, each of the image frames captured by the image capturing circuit 103 includes an image area (including at least one specific image pixel) corresponding to the specific object 499. In other words, each of the image frames includes at least one specific image pixel corresponding to the specific object 499.

In the embodiments of the disclosure, based on a degree of polarization of a specific image pixel (hereinafter referred to as specific pixel) corresponding to the specific object 499 in each of the image frames, the processor 104 may learn which of the first light-emitting units 101a emits the first light and which of the second light-emitting units 102a emits the second light that contribute to the light corresponding to the specific pixel. For example, the specific pixel is a pixel of the specific object 499 located at the center in each of the image frames; however, the disclosure is not limited thereto. Any pixel which may represent the specific object 499 falls in the scope of the disclosure.

Next, in step S240, the processor 104 may obtain a first specific modulation and a second specific modulation presented by the specific pixel at the timing points based on the image frames.

For example, in an embodiment, the image frames may include the multiple first image frames (corresponding to the first polarization direction) and the second image frames (corresponding to the second polarization direction) of the first embodiment. In this case, the processor 104 may obtain the first specific modulation presented by the specific pixel at the timing points based on the first image frames and obtain the second specific modulation presented by the specific pixel at the timing points based on the second image frames.

In another embodiment, the image capturing circuit 103 obtains the image frames through a method described in the second embodiment above. In this case, the processor 104 obtains first sub-pixels and second sub-pixels respectively corresponding to the first polarization direction and the second polarization direction among the pixels of each of the image frames. The processor 104 combines the first sub-pixels into multiple first image frames and combines the second sub-pixels into multiple second image frames.

Specifically, with regard to an ith (i being a positive integer) image frame among the image frames, the processor 104 may combine the first sub-pixels of each pixel in the ith image frame into a first image frame corresponding to the ith image frame and combine the second sub-pixels of each pixel in the ith image frame into a second image frame corresponding to the ith image frame. Furthermore, the processor 104 may analyze the first image frame corresponding to each of the image frames to obtain the first specific modulation presented by the specific pixel at the timing points. Similarly, the processor 104 may obtain the second specific modulation presented by the specific pixel at the timing points based on the second image frame corresponding to each of the image frames.

In addition, in step S250, the processor 104 may find a first specific light-emitting unit among the first light-emitting units 101a based on the first specific modulation and find a second specific light-emitting unit among the second light-emitting units 102a based on the second specific modulation.

For example, a first light-emitting unit A1 of the first light source 101 is modulated to emit the first light (e.g. having a horizontal polarization direction) by the first modulation having a bright-dark-bright-dark pattern. In this case, after the processor 104 analyzes the specific pixel of the first image frame and discovers that the degree of polarization of the specific pixel in the first image frame is presented in the first specific modulation of the bright-dark-bright-dark pattern, the processor 104 may determine that the light of the specific pixel is contributed by at least the first light of the first light-emitting unit A1. Accordingly, the processor 104 may determine that the first light-emitting unit A1 is the first specific light-emitting unit. Furthermore, a second light-emitting unit B1 in the second light source 102 is modulated to emit the second light (e.g. having a vertical polarization direction) by the second modulation having a dark-dark-bright-bright pattern. In this case, after the processor 104 analyzes the specific pixel of the second image frame and discovers that the degree of polarization of the specific pixel of the second image frame is presented in the second specific modulation of the dark-dark-bright-bright pattern, the processor 104 may determine that the light of the specific pixel is also contributed by the second light of the second light-emitting unit B1. Accordingly, the processor 104 may determine that the second light-emitting unit B1 is the second specific light-emitting unit.

Then, in step S260, the processor 104 may calculate a specific distance LL between the distance detection system 100 and the specific object 499 based on the first specific light-emitting unit and the second specific light-emitting unit.

In an embodiment, the processor 104 may obtain a predetermined distance between the first specific light-emitting unit and the second specific light-emitting unit. Then, the processor 104 may execute a triangulation location method based on a first emission direction of the first specific light-emitting unit, a second emission direction of the second specific light-emitting unit, and the predetermined distance to calculate the specific distance LL between the distance detection system 100 and the specific object 499.

For example, in the scenario in FIG. 3, the first specific light-emitting unit and the second specific light-emitting unit found by the processor 104 after the execution of step S250 are respectively a first light-emitting unit 401a and a second light-emitting unit 402a as shown. Hence, the processor 104 may estimate the specific distance LL. Specifically, in the embodiments of the disclosure, the locations of each first light-emitting unit 101a in the first light source 101 and each second light-emitting unit 102a in the second light source 102 are known. A distance between any first light-emitting unit 101a and any second light-emitting unit 102a may be measured in advance and thus considered to be known. In other words, a distance (hereinafter referred to as predetermined distance DD) between the first light-emitting unit 401a and the second light-emitting unit 402a is also known.

Furthermore, the first emission direction in which each of the first light-emitting units 101a emits the first light may be fixed, and the second emission direction in which each of the second light-emitting units 102a emits the second light may also be fixed.

Therefore, after it is determined that the first specific light-emitting unit and the second specific light-emitting unit are respectively the first light-emitting unit 401a and the second light-emitting unit 402a, the processor 104 may obtain the predetermined distance DD (having a value of, for example, d) between the first light-emitting unit 401a and the second light-emitting unit 402a. Then, the processor 104 may execute the triangulation location method based on a first emission direction D1 of the first light-emitting unit 401a, a second emission direction D2 of the second light-emitting unit 402a, and the predetermined distance DD to calculate the specific distance LL (having a value of, for example, $l$) between the distance detection system 100 and the specific object 499.

In FIG. 3, an included angle AN1 (having a value of, for example, $\alpha$) is formed between a connecting line between the first light-emitting unit 401a and the second light-emitting unit 402a, and the first emission direction D1, and an included angle AN2 (having a value of, for example, $\beta$) is formed between a connecting line between the first light-emitting unit 401a and the second light-emitting unit 402a, and the second emission direction D2. In this case, the specific distance LL may be, for example, calculated by the processor 104 as

$$l = d \times \frac{sin\alpha \times cos\beta}{sin(\alpha+\beta)}$$

, but is not limited thereto.

Based on the above, in the method of the disclosure, the specific distance LL between the distance detection system 100 and the specific object 499 may be determined in a different manner from that of the current technology. Even in a bright light/dim light environment, the specific distance LL between the distance detection system 100 and the specific object 499 can still be accurately determined by the method of the disclosure. Therefore, the chances of collisions and car accidents are reduced.

In other embodiments, when multiple specific objects are present in the specific field of view of the image capturing circuit 103, the method of the disclosure may still be employed to determine a distance between the distance detection system 100 and each of the specific objects. The disclosure is not limited thereto.

In addition, the disclosure further provides a mechanism below to improve the efficiency of finding the first specific light-emitting unit and the second specific light-emitting unit. Specifically, in the scenario of FIG. 3, the first light source 101 may be, for example, considered located on the left side of the distance detection system 100, and the second light source 102 may be, for example, considered located on the right side of the distance detection system 100. In this case, the first illumination range 411 of the first light source 101 corresponds to a first image area located on the left side in each of the image frame, and the second illumination range 412 of the second light source 102 corresponds to a second image area located on the right side in each of the image frame.

For example, assuming that an image frame IM is one of the image frames, the image frame IM may include a first image area IM1 and a second image area IM2 respectively corresponding to the first illumination range 411 and the second illumination range 412. As shown in FIG. 3, the first image area IM1 and the second image area IM2 have an overlapping area OR, and the specific pixel corresponding to the specific object 499 may be located in the overlapping area OR.

As shown in FIG. 3, among the first light-emitting units 101a of the first light source 101, only a part of the first light-emitting units 101a located near the right side are more likely to contribute to the first light for the specific pixel. Similarly, among the second light-emitting units 102a of the second light source 102, only a part of the second light-emitting units 102a located near the left side are more likely to contribute to the second light for the specific pixel. Therefore, the processor 104 may find the first specific light-emitting unit among the first light-emitting units 101a near the right side and find the second specific light-emitting unit among the second light-emitting units 102a near the left side.

In other words, the processor 104 may find the first specific light-emitting unit/the second specific light-emitting unit within a relatively small range. Therefore, the efficiency of finding the first specific light-emitting unit and the second specific light-emitting unit may be improved.

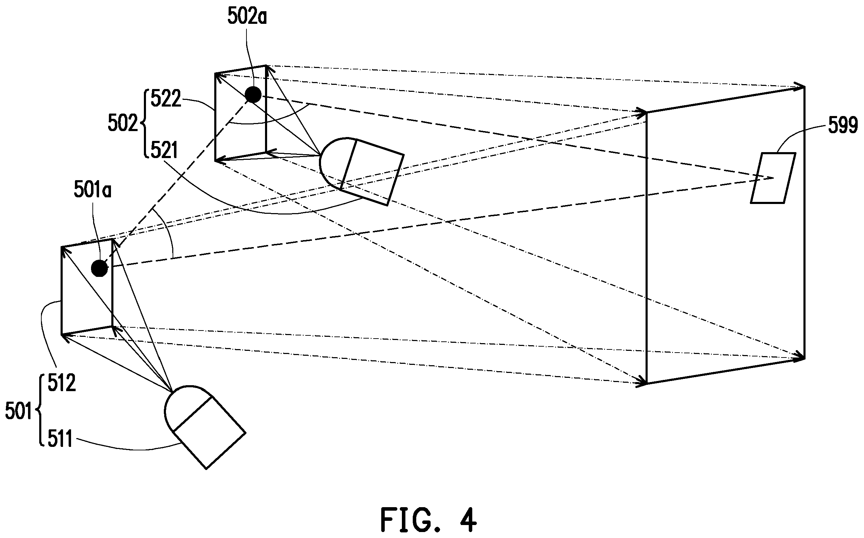

Referring to FIG. 4, FIG. 4 is a schematic diagram of a light source adopting a digital micro-mirror device technology according to an embodiment of the disclosure. In FIG. 4, a first light source 501 of the distance detection system 100 may include a sub-light source 511 and a micro-mirror array 512. The micro-mirror array 512 may include multiple micro-mirrors. Each of the micro-mirrors may emit a first light by reflecting a light of the sub-light source 511. In other words, the micro-mirrors in the micro-mirror array 512 may be understood as the first light-emitting units of the embodiment. In addition, a second light source 502 of the distance detection system 100 may include a sub-light source 521 and a micro-mirror array 522. The micro-mirror array 522 may include multiple micro-mirrors. Each of the micro-mirrors may emit a second light by reflecting a light of the sub-light source 521. In other words, the micro-mirrors in the micro-mirror array 522 may be understood as the second light-emitting units of the embodiment.

In the embodiment, assuming that the first specific light-emitting unit and the second specific light-emitting unit found are respectively a micro-mirror 501a and a micro-mirror 502b, the processor 104 may still calculate the specific distance between the distance detection system 100 and a specific object 599 based on the teaching above. The details thereof are not repeated here.

In summary of the above, each of the first light-emitting units in the first light source emits the first light based on the first polarization direction and the corresponding first modulation, and each of the second light-emitting units in the second light source emits the second light based on the second polarization direction and the corresponding second modulation. Therefore, in the method of the disclosure, after the first specific modulation and the second specific modulation presented by the specific pixel in multiple image frames are determined, the first specific light-emitting unit and the second specific light-emitting unit can be found accordingly. Then, in the method of the disclosure, the specific distance between the distance detection system and the specific object corresponding to the specific pixel can be estimated based on relative positions of the first specific light-emitting unit and the second specific light-emitting unit. Accordingly, even in a bright light/dim light environment, the specific distance between the distance detection system and the specific object can still be accurately determined by the method of the disclosure. Therefore, the chances of collisions and car accidents are reduced.

**Claims**

1. A distance detection system (100), comprising:

    a first light source (101, 501) having a first polarization direction and comprising a plurality of first light-emitting units (101a, 401a), wherein each of the first light-emitting units (101a, 401a) emits a first light to illuminate a specific object (499, 599) based on the first polarization direction and a first modulation of the each of the first light-emitting units (101a, 401a), wherein the first modulations of the first light-emitting units (101a, 401a) are all different;
    a second light source (102, 502) having a second polarization direction and comprising a plurality of second light-emitting units (102a, 402a), wherein each of the second light-emitting units (102a, 402a) emits a second light to illuminate the specific object (499, 599) based on the second polarization direction and a second modulation of the each of the second light-emitting units (102a, 402a), wherein the second modulations of the second light-emitting units (102a, 402a) are all different, and the first polarization direction and the second polarization direction are orthogonal to each other;
    an image capturing circuit (103) configured to capture a plurality of image frames (IM) in a specific field of view at a plurality of timing points, wherein each of the image frames (IM) comprises a specific pixel corresponding to the specific object (499, 599), wherein the image capturing circuit (103) is a polarization image capturing device that comprises a first lens and a second lens respectively corresponding to the first polarization direction and the second polarization direction, or the image capturing circuit (103) is a polarization image capturing device that comprises multiple polarization component sets, and each of the polarization component sets corresponds to one of image capturing pixels of the image capturing circuit (103), each of the polarization component sets comprises a first polarization component and a second polarization component respectively corresponding to the first polarization direction and the second polarization direction; and
    a processor (104) coupled to the first light source (101, 501), the second light source (102, 502) and the image capturing circuit (103) and configured to:

        obtain a first specific modulation and a second specific modulation presented by the specific pixel at the timing points based on the image frames (IM), wherein the first specific modulation corresponds to the first polarization direction, and the second specific modulation corresponds to the second polarization direction;
        find a first specific light-emitting unit among the first light-emitting units (101a, 401a) based on the first specific modulation and find a second specific light-emitting unit among the second light-emitting units (102a, 402a) based on the second specific modulation; and

obtain a predetermined distance (DD) between the first specific light-emitting unit and the second specific light-emitting unit; and

execute a triangulation location method based on a first emission direction (D1) of the first specific light-emitting unit, a second emission direction (D2) of the second specific light-emitting unit, and the predetermined distance (DD) to calculate a specific distance (LL) between the distance detection system (100) and the specific object (499, 599).

2. The distance detection system (100) according to claim 1, wherein the image capturing circuit (103) comprises a first lens and a second lens respectively corresponding to the first polarization direction and the second polarization direction, the image frames (IM) comprise a plurality of first image frames captured by the first lens and a plurality of second image frames captured by the second lens, and in obtaining the first specific modulation and the second specific modulation, the processor (104) is further configured to:

obtain the first specific modulation presented by the specific pixel at the timing points based on the first image frames; and
obtain the second specific modulation presented by the specific pixel at the timing points based on the second image frames.

3. The distance detection system (100) according to claim 1, wherein in obtaining the first specific modulation and the second specific modulation, the processor (104) is further configured to:

obtain, among a plurality of pixels of each of the image frames (IM), a plurality of first sub-pixels and a plurality of second sub-pixels respectively corresponding to the first polarization direction and the second polarization direction;
combine the first sub-pixels into a plurality of first image frames and combine the second sub-pixels into a plurality of second image frames;
obtain the first specific modulation presented by the specific pixel at the timing points based on the first image frames; and
obtain the second specific modulation presented by the specific pixel at the timing points based on the second image frames.

4. A distance detection method adapted for a distance detection system (100), comprising:

emitting a first light to illuminate a specific object (499, 599) by a plurality of first light-emitting units (101a, 401a) of a first light source (101, 501) respectively based on a first polarization direction and a first modulation of each of the first light-emitting units (101a, 401a), wherein the first modulations of the first light-emitting units (101a, 401a) are all different;
emitting a second light to illuminate the specific object (499, 599) by a plurality of second light-emitting units (102a, 402a) of a second light source (102, 502) respectively based on a second polarization direction and a second modulation of each of the second light-emitting units (102a, 402a), wherein the second modulations of the second light-emitting units (102a, 402a) are all different, and the first polarization direction and the second polarization direction are orthogonal to each other;
capturing a plurality of image frames (IM) in a specific field of view at a plurality of timing points by an image capturing circuit (103), wherein each of the image frames (IM) comprises a specific pixel corresponding to the specific object (499, 599), wherein the image capturing circuit (103) is a polarization image capturing device that comprises a first lens and a second lens respectively corresponding to the first polarization direction and the second polarization direction, or the image capturing circuit (103) is a polarization image capturing device that comprises multiple polarization component sets, and each of the polarization component sets corresponds to one of image capturing pixels of the image capturing circuit (103), each of the polarization component sets comprises a first polarization component and a second polarization component respectively corresponding to the first polarization direction and the second polarization direction;
obtaining a first specific modulation and a second specific modulation presented by the specific pixel at the timing points by a processor (104) based on the image frames (IM), wherein the first specific modulation corresponds to the first polarization direction, and the second specific modulation corresponds to the second polarization direction;
finding a first specific light-emitting unit among the first light-emitting units (101a, 401a) based on the first specific modulation by the processor (104) and finding a second specific light-emitting unit among the second light-emitting units (102a, 402a) based on the second specific modulation by the processor (104); and
obtaining a predetermined distance (DD) between the first specific light-emitting unit and the second specific light-emitting unit; and

executing a triangulation location method based on a first emission direction (D1) of the first specific light-emitting unit, a second emission direction (D2) of the second specific light-emitting unit, and the predetermined distance (DD) to calculate a specific distance (LL) between the distance detection system (100) and the specific object (499, 599).

5. The distance detection method according to claim 4, wherein capturing the image frames by the image capturing circuit (103) comprises:

capturing a plurality of first image frames having the first polarization direction in the specific field of view at the timing points by a first lens of the image capturing circuit (103); and
capturing a plurality of second image frames having the second polarization direction in the specific field of view at the timing points by a second lens of the image capturing circuit (103);
wherein obtaining the first specific modulation and the second specific modulation by the processor (104) comprises:

obtaining the first specific modulation presented by the specific pixel at the timing points based on the first image frames; and
obtaining the second specific modulation presented by the specific pixel at the timing points based on the second image frames.

6. The distance detection method according to claim 4, wherein obtaining the first specific modulation and the second specific modulation by the processor (104) comprises:

obtaining, among a plurality of pixels of each of the image frames (IM), a plurality of first sub-pixels and a plurality of second sub-pixels respectively corresponding to the first polarization direction and the second polarization direction;
combining the first sub-pixels into a plurality of first image frames and combining the second sub-pixels into a plurality of second image frames;
obtaining the first specific modulation presented by the specific pixel at the timing points based on the first image frames; and
obtaining the second specific modulation presented by the specific pixel at the timing points based on the second image frames.

**Patentansprüche**

1. System (100) zur Abstandserkennung, umfassend:

eine erste Lichtquelle (101, 501) mit einer ersten Polarisationsrichtung und umfassend eine Mehrzahl erster lichtemittierender Elementen (101a, 401a), wobei jede der ersten lichtemittierenden Elementen (101a, 401a) ein erstes Licht emittiert, um ein spezifisches Objekt (499, 599) in Abhängigkeit von der ersten Polarisationsrichtung und einer ersten Modulation jeder der ersten lichtemittierenden Elementen (101a, 401a) zu beleuchten, wobei die ersten Modulationen der ersten lichtemittierenden Elementen (101a, 401a) alle unterschiedlich sind;
eine zweite Lichtquelle (102, 502) mit einer zweiten Polarisationsrichtung und umfassend eine Mehrzahl zweiter lichtemittierender Elementen (102a, 402a), wobei jede der zweiten lichtemittierenden Elementen (102a, 402a) ein zweites Licht emittiert, um das spezifische Objekt (499, 599) in Abhängigkeit von der zweiten Polarisationsrichtung und einer zweiten Modulation jeder der zweiten lichtemittierenden Elementen (102a, 402a) zu beleuchten, wobei die zweiten Modulationen der zweiten lichtemittierenden Elementen (102a, 402a) alle unterschiedlich sind, und wobei die erste Polarisationsrichtung und die zweite Polarisationsrichtung orthogonal zueinander sind;
eine Bilderfassungsschaltung (103), die dazu ausgebildet ist, eine Mehrzahl von Bildrahmen (IM) in einem spezifischen Sichtfeld zu mehreren Zeitpunkten zu erfassen, wobei jeder der Bildrahmen (IM) ein spezifisches Pixel umfasst, das dem spezifischen Objekt (499, 599) entspricht, wobei die Bilderfassungsschaltung (103) eine Polarisationsbilderfassungsvorrichtung ist, die eine erste Linse und eine zweite Linse umfasst, die der ersten Polarisationsrichtung bzw. der zweiten Polarisationsrichtung entsprechen, oder wobei die Bilderfassungsschaltung (103) eine Polarisationsbilderfassungsvorrichtung ist, die mehrere Polarisationskomponentensätze umfasst, wobei jeder der Polarisationskomponentensätze einem der bilderfassenden Pixel der Bilderfassungsschaltung (103) entspricht, wobei jeder der Polarisationskomponentensätze ein erstes Polarisationselement und ein zweites Polarisationselement umfasst, die der ersten Polarisationsrichtung bzw. der zweiten Polarisationsrichtung entsprechen; und
einen Prozessor (104), der mit der ersten Lichtquelle (101, 501), der zweiten Lichtquelle (102, 502) und der Bilderfassungsschaltung (103) gekoppelt ist und ausgebildet ist zum:

Erhalten einer ersten spezifischen Modulation und einer zweiten spezifischen Modulation, die durch das spezifische Pixel zu den Zeitpunkten dargestellt werden, basierend auf den Bildrahmen (IM), wobei die erste spezifische Modulation der ersten Polarisationsrichtung entspricht und die zweite spezifische Modulation der zweiten Polarisationsrichtung entspricht;

Identifizieren eines ersten spezifischen lichtemittierenden Elements unter den ersten lichtemittierenden Elementen (101a, 401a) basierend auf der ersten spezifischen Modulation und Identifizieren eines zweiten spezifischen lichtemittierenden Elements unter den zweiten lichtemittierenden Elementen (102a, 402a) basierend auf der zweiten spezifischen Modulation; und

Erhalten eines vorbestimmten Abstands (DD) zwischen dem ersten spezifischen lichtemittierenden Element und dem zweiten spezifischen lichtemittierenden Element; und

Ausführen eines Triangulationslokalisierungsverfahrens basierend auf einer ersten Emissionsrichtung (D1) des ersten spezifischen lichtemittierenden Elements, einer zweiten Emissionsrichtung (D2) des zweiten spezifischen lichtemittierenden Elements und dem vorbestimmten Abstand (DD), um einen spezifischen Abstand (LL) zwischen dem System zur Abstandserkennung (100) und dem spezifischen Objekt (499, 599) zu berechnen.

2. System (100) zur Abstandserkennung nach Anspruch 1, wobei die Bilderfassungsschaltung (103) eine erste Linse und eine zweite Linse umfasst, die der ersten Polarisationsrichtung bzw. der zweiten Polarisationsrichtung entsprechen, wobei die Bildrahmen (IM) eine Mehrzahl erster Bildrahmen umfassen, die durch die erste Linse erfasst wurden, und eine Mehrzahl zweiter Bildrahmen, die durch die zweite Linse erfasst wurden, und wobei der Prozessor (104), beim Erhalten der ersten spezifischen Modulation und der zweiten spezifischen Modulation, ferner ausgebildet ist zum:

Erhalten der ersten spezifischen Modulation, die durch das spezifische Pixel zu den Zeitpunkten basierend auf den ersten Bildrahmen dargestellt wird; und
Erhalten der zweiten spezifischen Modulation, die durch das spezifische Pixel zu den Zeitpunkten basierend auf den zweiten Bildrahmen dargestellt wird.

3. System (100) zur Abstandserkennung nach Anspruch 1, wobei der Prozessor (104), beim Erhalten der ersten spezifischen Modulation und der zweiten spezifischen Modulation, ferner ausgebildet ist zum:

Erhalten, aus einer Mehrzahl von Pixeln jedes der Bildrahmen (IM), einer Mehrzahl erster Subpixel und einer Mehrzahl zweiter Subpixel, die der ersten Polarisationsrichtung bzw. der zweiten Polarisationsrichtung entsprechen;
Kombinieren der ersten Subpixel zu einer Mehrzahl erster Bildrahmen und Kombinieren der zweiten Subpixel zu einer Mehrzahl zweiter Bildrahmen;
Erhalten der ersten spezifischen Modulation, die durch das spezifische Pixel zu den Zeitpunkten basierend auf den ersten Bildrahmen dargestellt wird; und
Erhalten der zweiten spezifischen Modulation, die durch das spezifische Pixel zu den Zeitpunkten basierend auf den zweiten Bildrahmen dargestellt wird.

4. Verfahren (100) zur Abstandserkennung, das für ein System (100) zur Abstandserkennung angepasst ist, umfassend die folgenden Schritte:

Emittieren eines ersten Lichts zur Beleuchtung eines spezifischen Objekts (499, 599) durch eine Mehrzahl erster lichtemittierender Komponenten (101a, 401a) einer ersten Lichtquelle (101, 501) jeweils basierend auf einer ersten Polarisationsrichtung und einer ersten Modulation jedes der ersten lichtemittierenden Elemente (101a, 401a), wobei die ersten Modulationen der ersten lichtemittierenden Elemente (101a, 401a) alle unterschiedlich sind;
Emittieren eines zweiten Lichts zur Beleuchtung des spezifischen Objekts (499, 599) durch eine Mehrzahl zweiter lichtemittierender Komponenten (102a, 402a) einer zweiten Lichtquelle (102, 502) jeweils basierend auf einer zweiten Polarisationsrichtung und einer zweiten Modulation jeder der zweiten lichtemittierenden Elemente (102a, 402a), wobei die zweiten Modulationen der zweiten lichtemittierenden Elemente (102a, 402a) alle unterschiedlich sind, und wobei die erste Polarisationsrichtung und die zweite Polarisationsrichtung orthogonal zueinander sind;
Erfassen einer Mehrzahl von Bildrahmen (IM) in einem spezifischen Sichtfeld zu einer Mehrzahl von Zeitpunkten durch eine Bilderfassungsschaltung (103), wobei jeder der Bildrahmen (IM) ein spezifisches Pixel umfasst, das dem spezifischen Objekt (499, 599) entspricht, wobei die Bilderfassungsschaltung (103) eine Polarisationsbilderfassungsvorrichtung ist, die eine erste Linse und eine zweite Linse umfasst, die der ersten Polarisationsrichtung bzw. der zweiten Polarisationsrichtung entsprechen, oder wobei die Bilderfassungsschaltung (103) eine Polarisationsbilderfassungsvorrichtung ist, die mehrere Polarisationskomponentensätze umfasst, wobei jeder der Polarisationskomponentensätze einem der bilderfassenden Pixel der Bilderfassungsschaltung (103) entspricht, wobei jeder der Polarisationskomponentensätze eine erste Polarisationskomponente und eine zweite Polarisationskomponente umfasst, die der ersten Polarisationsrichtung bzw. der zweiten Polarisationsrichtung entsprechen;

Erhalten einer ersten spezifischen Modulation und einer zweiten spezifischen Modulation, die durch das spezifische Pixel zu den Zeitpunkten dargestellt werden, durch einen Prozessor (104) basierend auf den Bildrahmen (IM), wobei die erste spezifische Modulation der ersten Polarisationsrichtung entspricht und die zweite spezifische Modulation der zweiten Polarisationsrichtung entspricht;

Identifizieren eines ersten spezifischen lichtemittierenden Elements unter den ersten lichtemittierenden Elementen (101a, 401a) basierend auf der ersten spezifischen Modulation durch den Prozessor (104) und Identifizieren eines zweiten spezifischen lichtemittierenden Elements unter den zweiten lichtemittierenden Elementen (102a, 402a) basierend auf der zweiten spezifischen Modulation durch den Prozessor (104);

Erhalten eines vorbestimmten Abstands (DD) zwischen dem ersten spezifischen lichtemittierenden Elements und des zweiten spezifischen lichtemittierenden Elements; und

Ausführen eines Triangulationslokalisierungsverfahrens basierend auf einer ersten Emissionsrichtung (D1) des ersten spezifischen lichtemittierenden Elements, einer zweiten Emissionsrichtung (D2) des zweiten spezifischen lichtemittierenden Elements und dem vorbestimmten Abstand (DD), um einen spezifischen Abstand (LL) zwischen dem System zur Abstandserkennung (100) und dem spezifischen Objekt (499, 599) zu berechnen.

5. Verfahren zur Abstandserkennung nach Anspruch 4, wobei das Erfassen der Bildrahmen durch die Bilderfassungsschaltung (103) umfasst:

Erfassen einer Mehrzahl erster Bildrahmen mit der ersten Polarisationsrichtung in dem spezifischen Sichtfeld zu den Zeitpunkten durch eine erste Linse der Bilderfassungsschaltung (103); und

Erfassen einer Mehrzahl zweiter Bildrahmen mit der zweiten Polarisationsrichtung in dem spezifischen Sichtfeld zu den Zeitpunkten durch eine zweite Linse der Bilderfassungsschaltung (103);

wobei das Erhalten der ersten spezifischen Modulation und der zweiten spezifischen Modulation durch den Prozessor (104) Folgendes umfasst:

Erhalten der ersten spezifischen Modulation, die durch das spezifische Pixel zu den Zeitpunkten basierend auf den ersten Bildrahmen dargestellt wird; und

Erhalten der zweiten spezifischen Modulation, die durch das spezifische Pixel zu den Zeitpunkten basierend auf den zweiten Bildrahmen dargestellt wird.

6. Verfahren zur Abstandserkennung nach Anspruch 4, wobei das Erhalten der ersten spezifischen Modulation und der zweiten spezifischen Modulation durch den Prozessor (104) umfasst:

Erhalten, aus einer Mehrzahl von Pixeln jedes der Bildrahmen (IM), einer Mehrzahl erster Subpixel und einer Mehrzahl zweiter Subpixel, die der ersten Polarisationsrichtung bzw. der zweiten Polarisationsrichtung entsprechen;

Kombinieren der ersten Subpixel zu einer Mehrzahl erster Bildrahmen und Kombinieren der zweiten Subpixel zu einer Mehrzahl zweiter Bildrahmen;

Erhalten der ersten spezifischen Modulation, die durch das spezifische Pixel zu den Zeitpunkten basierend auf den ersten Bildrahmen dargestellt wird; und

Erhalten der zweiten spezifischen Modulation, die durch das spezifische Pixel zu den Zeitpunkten basierend auf den zweiten Bildrahmen dargestellt wird.

**Revendications**

1. Système de détection de distance (100) comprenant :

une première source lumineuse (101, 501) ayant une première direction de polarisation et comprenant une pluralité de premières unités électroluminescentes (101a, 401a), dans lequel chacune des premières unités électroluminescentes (101a, 401a) émet une première lumière pour éclairer un objet spécifique (499, 599) sur la base de la première direction de polarisation et d'une première modulation de chacune des premières unités électroluminescentes (101a, 401a), dans lequel les premières modulations de ces premières unités (101a, 401a) sont toutes différentes ;

une deuxième source lumineuse (102, 502) ayant une deuxième direction de polarisation et comprenant une pluralité de deuxièmes unités électroluminescentes (102a, 402a), dans lequel chacune des deuxièmes unités électroluminescentes (102a, 402a) émet une deuxième lumière pour éclairer l'objet spécifique (499, 599) sur la base de la deuxième direction de polarisation et d'une deuxième modulation de chacune des deuxièmes unités électroluminescentes (102a, 402a), dans lequel les deuxièmes modulations des deuxièmes unités électroluminescentes (102a, 402a) sont toutes différentes, et les première et deuxième directions de polarisation sont orthogonales l'une à l'autre ;
un circuit de capture d'image (103) configuré pour capturer une pluralité de trames d'image (IM) dans un champ de vision spécifique à une pluralité de points de synchronisation, dans lequel chacune des trames d'image (IM) comprend un pixel spécifique correspondant à l'objet spécifique (499, 599), dans lequel le circuit de capture d'image (103) est un dispositif de capture d'image polarisée qui comprend une première lentille et une deuxième lentille correspondant respectivement à la première direction de polarisation et à la deuxième direction de polarisation, ou le circuit de capture d'image (103) est un dispositif de capture d'image polarisée qui comprend plusieurs ensembles de composantes de polarisation, et chacun des ensembles de composantes de polarisation correspond à un des pixels de capture d'image du circuit de capture d'image (103), chacun des ensembles de composantes de polarisation comprend une première composante de polarisation et une deuxième composante de polarisation correspondant respectivement à la première direction de polarisation et à la deuxième direction de polarisation ; et
un processeur (104) couplé à la première source lumineuse (101, 501), à la deuxième source lumineuse (102, 502) et au circuit de capture d'image (103) et configuré pour :

obtenir une première modulation spécifique et une deuxième modulation spécifique présentées par le pixel spécifique aux points de synchronisation sur la base des trames d'image (IM), dans lequel la première modulation spécifique correspond à la première direction de polarisation et la deuxième modulation spécifique correspond à la deuxième direction de polarisation ;
trouver une première unité électroluminescente spécifique parmi les premières unités électroluminescentes (101a, 401a) sur la base de la première modulation spécifique et trouver une deuxième unité électroluminescente spécifique parmi les deuxièmes unités électroluminescentes (102a, 402a) sur la base de la deuxième modulation spécifique ; et
obtenir une distance prédéterminée (DD) entre la première et la deuxième unité électroluminescente spécifique ; et
exécuter un procédé de localisation par triangulation basée sur une première direction d'émission (D1) de la première unité électroluminescente spécifique, une deuxième direction d'émission (D2) de la deuxième unité électroluminescente spécifique et la distance prédéterminée (DD) pour calculer une distance spécifique (LL) entre le système de détection de distance (100) et l'objet spécifique (499, 599).

2. Système de détection de distance (100) selon la revendication 1, dans lequel le circuit de capture d'image (103) comprend une première lentille et une deuxième lentille correspondant respectivement à la première direction de polarisation et à la deuxième direction de polarisation, les trames d'image (IM) comprennent une pluralité de premières trames d'image capturées par la première lentille et une pluralité de deuxièmes trames d'image capturées par la deuxième lentille et lors de l'obtention de la première modulation spécifique et de la deuxième modulation spécifique, le processeur (104) est en outre configuré pour :

obtenir la première modulation spécifique présentée par le pixel spécifique aux points de synchronisation sur la base des premières trames d'image ; et
obtenir la deuxième modulation spécifique présentée par le pixel spécifique aux points de synchronisation, sur la base des deuxièmes trames d'image.

3. Système de détection de distance (100) selon la revendication 1, dans lequel, lors de l'obtention de la première modulation spécifique et de la deuxième modulation spécifique, le processeur (104) est en outre configuré pour :

obtenir, parmi une pluralité de pixels de chacune des trames d'image (IM), une pluralité de premiers sous-pixels et une pluralité de deuxièmes sous-pixels correspondant respectivement à la première direction de polarisation et à la deuxième direction de polarisation ;
combiner les premiers sous-pixels en une pluralité de premières trames d'image et combiner les deuxièmes sous-pixels en une pluralité de deuxièmes trames d'image ;
obtenir la première modulation spécifique présentée par le pixel spécifique aux points de synchronisation, sur la base des premières trames d'image ; et

obtenir la deuxième modulation spécifique présentée par le pixel spécifique aux points de synchronisation, sur la base des deuxièmes trames d'image.

4. Procédé de détection de distance adapté à un système de détection de distance (100), comprenant :

l'émission d'une première lumière pour éclairer un objet spécifique (499, 599) par une pluralité de premières unités électroluminescentes (101a, 401a) d'une première source lumineuse (101, 501), sur la base respectivement d'une première direction de polarisation et d'une première modulation de chacune des premières unités électroluminescentes (101a, 401a), dans lequel les premières modulations des premières unités électroluminescentes (101a, 401a) sont toutes différentes ;

l'émission d'une deuxième lumière pour éclairer l'objet spécifique (499, 599) par une pluralité de deuxièmes unités électroluminescentes (102a, 402a) d'une deuxième source lumineuse (102, 502), sur la base respectivement d'une deuxième direction de polarisation et d'une deuxième modulation de chacune des deuxièmes unités électroluminescentes (102a, 402a), dans lequel les deuxièmes modulations des deuxièmes unités électroluminescentes (102a, 402a) sont toutes différentes et la première direction de polarisation et la deuxième direction de polarisation sont orthogonales l'une à l'autre ;

la capture d'une pluralité de trames d'images (IM) dans un champ de vision spécifique à une pluralité points de synchronisation par un circuit de capture d'image (103), dans lequel chacune des trames d'image (IM) comprend un pixel spécifique correspondant à l'objet spécifique (499, 599), dans lequel le circuit de capture d'image (103) est un dispositif de capture d'image polarisée qui comprend une première lentille et une deuxième lentille correspondant respectivement à la première direction de polarisation et à la deuxième direction de polarisation ou le circuit de capture d'image (103) est un dispositif de capture d'image polarisée qui comprend plusieurs ensembles de composantes de polarisation et chacun des ensembles de composantes de polarisation correspond à un des pixels de capture d'image du circuit de capture d'image (103), chacun des ensembles de composantes de polarisation comprend une première composant de polarisation et une deuxième composante de polarisation correspondant respectivement à la première direction de polarisation et à la deuxième direction de polarisation;

l'obtention d'une première modulation spécifique et d'une deuxième modulation spécifique présentées par le pixel spécifique aux points de synchronisation par un processeur (104) sur la base des trames d'image (IM), dans lequel la première modulation spécifique correspond à la première direction de polarisation et la deuxième modulation spécifique correspond à la deuxième direction de polarisation ;

la recherche d'une première unité électroluminescente spécifique parmi les premières unités électroluminescentes (101a, 401a) sur la base de la première modulation spécifique par le processeur (104) et la recherche d'une deuxième unité électroluminescente spécifique parmi les deuxièmes unités électroluminescentes (102a, 402a) sur la base de la deuxième modulation spécifique par le processeur (104) ; et

l'obtention d'une distance prédéterminée (DD) entre la première unité électroluminescente spécifique et la deuxième unité électroluminescente spécifique ; et

l'exécution d'un procédé de localisation par triangulation basé sur une première direction d'émission (D1) de la première unité électroluminescente spécifique, une deuxième direction d'émission (D2) de la deuxième unité électroluminescente spécifique et la distance prédéterminée (DD) pour calculer une distance spécifique (LL) entre le système de détection de distance (100) et l'objet spécifique (499, 599).

5. Procédé de détection de distance selon la revendication 4, dans lequel la capture des trames d'image par le circuit de capture d'image (103) comprend :

la capture d'une pluralité de premières trames d'images ayant la première direction de polarisation dans le champ de vision spécifique aux points de synchronisation par une première lentille du circuit de capture d'images (103) ; et

la capture d'une pluralité de deuxièmes images ayant la deuxième direction de polarisation dans le champ de vision spécifique aux points de synchronisation par une deuxième lentille du circuit de capture d'images (103) ;

dans lequel l'obtention de la première modulation spécifique et de la deuxième modulation spécifique par le processeur (104) comprend :

l'obtention de la première modulation spécifique présentée par le pixel spécifique aux points de synchronisation sur la base des premières trames d'image ; et

l'obtention de la deuxième modulation spécifique présentée par le pixel spécifique aux points de synchronisation sur la base des deuxièmes trames d'image.

**6.** Procédé de détection de distance selon la revendication 4, dans lequel l'obtention de la première modulation spécifique et de la deuxième modulation spécifique par le processeur (104) comprend :

l'obtention, parmi une pluralité de pixels de chacune des trames d'image (IM), d'une pluralité de premiers sous-pixels et d'une pluralité de deuxièmes sous-pixels correspondant respectivement à la première direction de polarisation et à la deuxième direction de polarisation ;

la combinaison des premiers sous-pixels en une pluralité de premières trames d'image et la combinaison des deuxièmes sous-pixels en une pluralité de deuxièmes trames d'image ;

l'obtention de la première modulation spécifique présentée par le pixel spécifique aux points de synchronisation sur la base des premières trames d'image ; et

l'obtention de la deuxième modulation spécifique présentée par le pixel spécifique aux points de synchronisation sur la base des deuxièmes trames d'image.

FIG. 1

Emit a first light to illuminate a specific object by multiple first light-emitting units of a first light source respectively based on a first polarization direction and a first modulation of each of the first light-emitting units ⎯ S210

Emit a second light to illuminate the specific object by multiple second light-emitting units of a second light source respectively based on a second polarization direction and a second modulation of each of the second light-emitting units ⎯ S220

Capture multiple image frames in a specific field of view at multiple timing points ⎯ S230

Obtain a first specific modulation and a second specific modulation presented by a specific pixel at the timing points based on the image frames ⎯ S240

Find a first specific light-emitting unit among the first light-emitting units based on the first specific modulation, and find a second specific light-emitting unit among the second light-emitting units based on the second specific modulation ⎯ S250

Calculate a specific distance between the distance detection system and the specific object based on the first specific light-emitting unit and the second specific light-emitting unit ⎯ S260

# FIG. 2

FIG. 3

EP 4 016 475 B1

**FIG. 4**

EP 4 016 475 B1

**EP 4 016 475 B1**

**Patent documents cited in the description**

- US 20160187471 A1